# EUROPEAN PATENT APPLICATION

(11) **EP 4 478 499 A1**
(43) Date of publication of application: **18.12.2024**
(21) Application number: 22929382.4
(22) Date of filing: 04.03.2022
(51) Int. Cl.: H01M 50/186, H01M 50/105, H01M 50/184

(54) **ELECTROCHEMICAL APPARATUS AND ELECTRICAL DEVICE**

(71) Applicant: Ningde Amperex Technology Ltd., Ningde, Fujian 352106 (CN)
(72) Inventor: MA, Cong, Ningde, Fujian 352106 (CN); DENG, Daolin, Ningde, Fujian 352106 (CN); CHEN, Wen, Ningde, Fujian 352106 (CN); LI, Xun, Ningde, Fujian 352106 (CN)
(74) Representative: Icosa
(86) International application number: PCT/CN2022/079347
(87) International publication number: WO 2023/164939

(57) **Abstract**

An electrochemical apparatus, including a housing. The housing includes a main body part and a sealed part extending outward from an edge of the main body part. The main body part is configured to accommodate an electrode assembly. The sealed part includes a first outer edge, an outer arc edge, and a second outer edge. The outer arc edge connects the first outer edge and the second outer edge. The outer arc edge protrudes toward the main body part. A minimum curvature radius of the outer arc edge is rₘᵢₙ mm, satisfying: rₘᵢₙ≥0.3, which can reduce the stress concentration at the outer arc edge of the sealed part under drop conditions, thereby reducing the risk of tear and damage to the sealed part of a battery under drop conditions, which otherwise causes safety accidents.

## Description

### TECHNICAL FIELD

This application relates to the technical field of energy storage, and in particular, to an electrochemical apparatus and an electric device.

### BACKGROUND

The use of special-shaped batteries improves the adaptability of the batteries to structures of electric devices, enriches the application scenarios of the batteries, and makes people's daily life more convenient. However, the inventors of this application have found that special-shaped batteries with inner corners are prone to tearing in sealed areas of the outer packaging at the inner corners of the batteries under drop conditions, affecting the use safety of the batteries.

### SUMMARY

In view of this, it is necessary to provide an electrochemical apparatus and an electric device, so as to reduce the risk of tear and damage to a sealed area at an inner corner of a battery under drop conditions.

A first aspect of this application provides an electrochemical apparatus including a housing. The housing includes a main body part and a sealed part extending outward from an edge of the main body part. The main body part is configured to accommodate an electrode assembly. The sealed part includes a first outer edge, an outer arc edge, and a second outer edge. The outer arc edge connects the first outer edge and the second outer edge. The outer arc edge protrudes toward the main body part. A minimum curvature radius of the outer arc edge is rₘᵢₙ mm, satisfying: rₘᵢₙ≥0.3. Setting the minimum curvature radius of the outer arc edge to be greater than or equal to 0.3 mm can reduce the stress concentration at the outer arc edge of the sealed part under drop conditions, thereby reducing the risk of tear and damage to the sealed part of the battery under drop conditions, which otherwise causes safety accidents.

Optionally, rₘᵢₙ≤5. In this case, a small notch is present at the outer arc edge, which can improve the sealing strength at the inner corner, thereby reducing the risk of tear and damage to the sealed part at the inner corner of the battery under drop conditions.

Optionally, in some embodiments of this application, the sealed part further includes an inner arc edge, the inner arc edge protrudes toward the main body part, and a distance from a position of a minimum curvature radius of the outer arc edge to the inner arc edge is Dₘᵢₙ mm, satisfying: Dₘᵢₙ×rₘᵢₙ≥0.1. In this case, a sealing width at the position of the minimum curvature radius of the outer arc edge can match the stress applied to this position, which can reduce the risk of the position of the minimum curvature radius being completely torn, improving the sealing reliability of the electrochemical apparatus.

Optionally, in some embodiments of this application, Dₘᵢₙ≥1, which can increase the sealing width at the position of the minimum curvature radius of the outer arc edge at the inner corner, thereby increasing the sealing strength at this position and reducing the risk of failure of the sealed part at the inner corner.

Optionally, in some embodiments of this application, a minimum curvature radius of the inner arc edge is Rₘᵢₙ mm, satisfying: Rₘᵢₙ≥2. In this case, under drop conditions, when the inner arc edge is impacted by the electrode assembly inside the electrochemical apparatus, an impact force applied to this position can be dispersed, thereby reducing the risk of failure of the sealed part at the inner corner.

Optionally, in some embodiments of this application, the sealed part includes a first folded edge part and a second folded edge part, the first outer edge is provided on the first folded edge part, and the second outer edge is provided on the second folded edge part. In this case, under drop conditions, when the first folded edge part and the second folded edge part are impacted, a shearing force applied to the sealed part can be reduced, thereby reducing the risk of the first outer edge and the second outer edge being torn and improving the sealing reliability of the electrochemical apparatus.

Optionally, in some embodiments of this application, the first folded edge part extends along a first direction, the second folded edge part extends along a second direction, and the first direction intersects with the second direction.

Optionally, in some embodiments of this application, the first folded edge part includes a first folded portion and a second folded portion, the second folded portion being located between the first folded portion and the main body part. The provision of the first folded portion and the second folded portion can improve the sealing reliability of the first folded edge part.

Optionally, in some embodiments of this application, the second folded edge part includes a third folded portion and a fourth folded portion, the fourth folded portion being located between the third folded portion and the main body part. The provision of the third folded portion and the fourth folded portion can improve the sealing reliability of the second folded edge part.

Optionally, in some embodiments of this application, a shape of the housing includes any one of L shape, V shape, U shape, or W shape.

Optionally, in some embodiments of this application, the electrode assembly includes at least one of a wound structure or a laminated structure.

A second aspect of this application further provides an electric device including the electrochemical apparatus according to any one of the foregoing embodiments.

In the electrochemical apparatus of this application, setting the minimum curvature radius of the outer arc edge to be greater than or equal to 0.5 mm can reduce the stress concentration on the sealed part at the inner corner under drop conditions, thereby reducing the risk of tear and damage to the sealed part at the inner corner of the battery under drop conditions, which otherwise causes safety accidents.

### BRIEF DESCRIPTION OF DRAWINGS

FIG. 1 is a schematic structural diagram of an electrochemical apparatus according to some embodiments of this application.
FIG. 2 is a schematic structural diagram of a housing according to some embodiments of this application.
FIG. 3 is a schematic structural diagram of a sealed part at an inner corner of position III in FIG. 1 according to some embodiments of this application.
FIG. 4 is a schematic structural diagram of a sealed part according to some other embodiments of this application.
FIG. 5 is a schematic structural diagram of an electric device according to some embodiments of this application.

### Reference signs of main components:

| | |
|---|---|
| Electrochemical apparatus | 100 |
| Housing | 10 |
| Main body part | 10a |
| Sealed part | 10b |
| First folded edge part | 101a |
| Second folded edge part | 102a |
| First outer edge | 101 |
| Outer arc edge | 102 |
| Second outer edge | 103 |
| Inner arc edge | 104 |
| First shell | 11 |
| Second shell | 12 |
| First extension part | 11a |
| First extension section | 111 |
| Third extension section | 112 |
| Second extension part | 12a |
| Second extension section | 121 |
| Fourth extension section | 122 |
| Sealed area | 1011 |
| Unsealed area | 1012 |
| Tab assembly | 20 |
| First tab | 21 |
| Second tab | 22 |

This application will be further described with reference to the accompanying drawings in the following specific embodiments.

### DESCRIPTION OF EMBODIMENTS

The following describes the technical solutions in some embodiments of this application with reference to the accompanying drawings in these embodiments of this application. Apparently, the described embodiments are only some rather than all of the embodiments of this application.

When one component is assumed as being "disposed on/in" another component, the component may be provided directly on/in the another component or with a component possibly present therebetween. When one component is assumed as being "connected to" another component, it may be connected to the another component directly or with a component possibly present therebetween.

Unless otherwise defined, all technical and scientific terms used herein shall have the same meanings as commonly understood by those skilled in the art to which this application pertains. The terms used herein in the specification of this application are for description of specific embodiments only without any intention to limit this application. The term "or/and" used herein includes any and all combinations of one or more associated items listed.

An embodiment of this application provides an electrochemical apparatus including a housing. The housing includes a main body part and a sealed part extending outward from an edge of the main body part. The main body part is configured to accommodate an electrode assembly. The sealed part includes a first outer edge, an outer arc edge, and a second outer edge. The outer arc edge connects the first outer edge and the second outer edge. The outer arc edge protrudes toward the main body part. A minimum curvature radius of the outer arc edge is rₘᵢₙ mm, satisfying: rₘᵢₙ≥0.3. Setting the minimum curvature radius of the outer arc edge to be greater than or equal to 0.3 mm can reduce the stress concentration at the outer arc edge of the sealed part at an inner corner under drop conditions, thereby reducing the risk of tear and damage to the sealed part at the inner corner of a battery under drop conditions.

The following describes in detail some embodiments of this application with reference to the accompanying drawings. Without conflict, the following embodiments and features in these embodiments may be combined with each other.

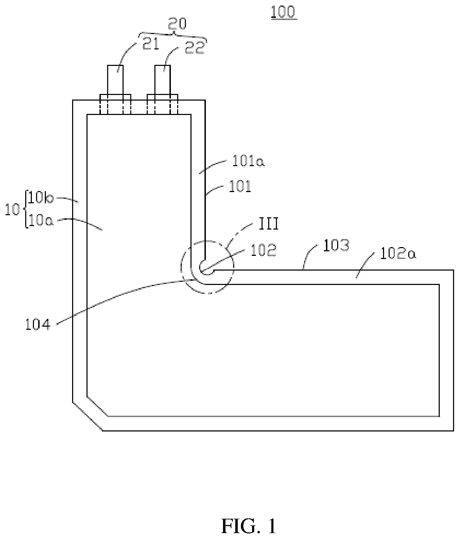

Referring to FIG. 1, an embodiment of this application provides an electrochemical apparatus 100 including a housing 10, an electrode assembly (not shown in the figure), and a tab assembly 20, where the electrode assembly is disposed inside the housing 10, and the tab assembly 20 is connected to the electrode assembly and leads out of the housing 10.

In some embodiments, the electrode assembly includes a wound structure formed by winding a positive electrode plate, a negative electrode plate, and a separator located between the positive electrode plate and the negative electrode plate. In some other embodiments, the electrode assembly may alternatively be of a laminated structure, that is, the electrode assembly is formed by sequentially stacking a plurality of positive electrode plates, separators, and negative electrode plates. In another embodiment, the electrode assembly includes the wound structure and the laminated structure. Optionally, the housing 10 includes an aluminum-plastic film.

The housing 10 includes a main body part 10a and a sealed part 10b extending outward from an edge of the main body part 10a, where the main body part 10a is used to accommodate the electrode assembly, and the tab assembly 20 extends out from the sealed part 10b. Optionally, a shape of the housing 10 includes any one of L shape, V shape, U shape, or W shape. Optionally, the tab assembly 20 includes a first tab 21 and a second tab 22, where the first tab 21 and the second tab 22 have opposite polarities, and one of the first tab 21 and the second tab 22 is a positive electrode tab, and the other is a negative electrode tab.

In some embodiments, the housing 10 includes a first layer, a metal layer, and a second layer that are stacked, where the metal layer is located between the first layer and the second layer, and the second layer is located at the outermost layer of the housing. The second layer may be a nylon layer or a composite layer of polyester resin (PET) and nylon, implementing protective functions of preventing pollution, resisting corrosion, and preventing damage caused by an external force. The metal layer may include one of aluminum or steel, implementing functions of waterproofing, blocking, and shaping the housing. The first layer is a heat sealing layer, and the first layer may include a polymer, where the polymer includes at least one of polypropylene or polyethylene. The first layer is used to seal the housing 10 to form the sealed part 10b; and the first layer is used to separate the metal layer from the electrode assembly, reducing the risk of short circuit of the electrode assembly and electrolyte corrosion on the metal layer inside the housing 10.

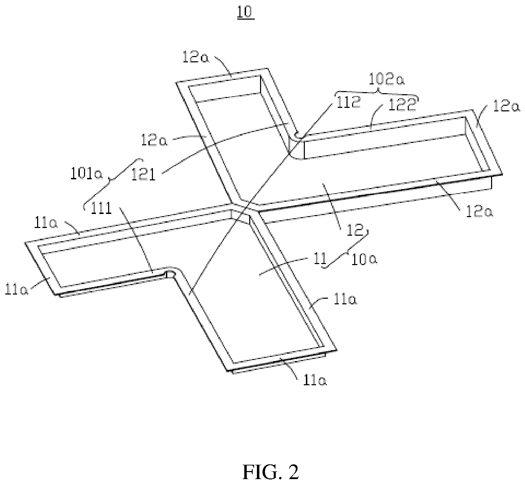

Referring to FIG. 2, in an embodiment, the housing 10 includes a first shell 11 and a second shell 12, where the first shell 11 is connected to the second shell 12. The first shell 11 and the second shell 12 can be snap-fitted along a connection position, allowing the first shell 11 and the second shell 12 to overlap to form the main body part 10a for covering the electrode assembly. A peripheral side of the first shell 11 extends outward to form a plurality of first extension parts 11a, and a peripheral side of the second shell 12 extends outward to form a plurality of second extension parts 12a. After the first shell 11 and the second shell 12 are snap-fitted along the connection position, the first extension parts 11a and the second extension parts 12a overlap and are hermetically connected to form the sealed part 10b.

Referring to FIGs. 1, 2, and 3, the sealed part 10b includes a first outer edge 101, an outer arc edge 102, and a second outer edge 103, where the outer arc edge 102 is located between the first outer edge 101 and the second outer edge 103 and connects the first outer edge 101 and the second outer edge 103 to form an inner corner. Optionally, a shape of the inner corner includes any one of L shape, V shape, U shape, or W shape. The outer arc edge 102 protrudes toward the main body part 10a, and a minimum curvature radius of the outer arc edge 102 is rₘᵢₙ mm, satisfying: rₘᵢₙ≥0.3. Limiting the minimum curvature radius of the outer arc edge 102 to be greater than or equal to 0.3 mm can reduce the stress concentration on the sealed part 10b at the inner corner under drop conditions, thereby reducing the risk of tear and damage to the sealed part 10b at the inner corner of the battery under drop conditions. In an embodiment, rₘᵢₙ≥0.5. In some embodiments, rₘᵢₙ is 0.3, 0.4, 0.5, 0.8, 1, 2, 3, 4, 5, 6, 7, 8, 9, or 10, or a range defined by any two of the foregoing values.

In an embodiment, rₘᵢₙ≤5. In this case, a small notch is present at the outer arc edge 102, which can improve the sealing strength at the inner corner, thereby reducing the risk of tear and damage to the sealed part 10b at the inner corner of the battery under drop conditions.

In an embodiment, the sealed part 10b further includes an inner arc edge 104, where the inner arc edge 104 protrudes toward the main body part 10a. A minimum curvature radius of the inner arc edge 104 is Rₘᵢₙ mm, satisfying: Rₘᵢₙ≥2. In this case, under drop conditions, when the inner arc edge 104 is impacted by the electrode assembly inside the electrochemical apparatus 100, an impact force applied to this position can be dispersed, thereby reducing the risk of failure of the sealed part at the inner corner. In some embodiments, Rₘᵢₙ is 2, 3, 4, 5, 6, 7, 8, 9, or 10, or a range defined by any two of the foregoing values.

In an embodiment, a distance from a position with the minimum curvature radius of the outer arc edge 102 to the inner arc edge 104 is Dₘᵢₙ mm, satisfying: Dₘᵢₙ×rₘᵢₙ≥0.1, where Dₘᵢₙ is a width between the position of the minimum curvature radius of the outer arc edge 102 and the inner arc edge 104. By satisfying the above relationship, a sealing width at the position of the minimum curvature radius of the outer arc edge 102 can match the stress applied to this position, which can reduce the risk of the position of the minimum curvature radius being completely torn, improving the sealing reliability of the electrochemical apparatus. In some embodiments, Dₘᵢₙ×rₘᵢₙ is 0.1, 0.2, 0.3, 0.4, 0.5, 0.6, 0.7, 0.8, 0.9, 1, 1.5, 2, 2.5, 3, 4, 5, or 6, or a range defined by any two of the foregoing values.

In an embodiment, Dₘᵢₙ≥1, which can increase the sealing width at the position of the minimum curvature radius of the outer arc edge 102 at the inner corner, thereby increasing the sealing strength at this position and reducing the risk of failure of the sealed part 10b at the inner corner.

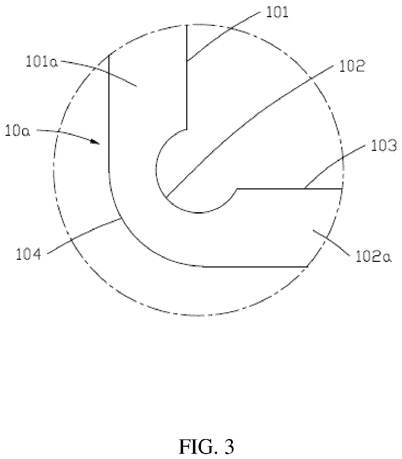

Referring to FIGs. 2 and 3, optionally, when the first extension part 11a and the second extension part 12a are completely sealed, the inner arc edge 104 serves as the innermost arc edges of the first extension part 11a and the second extension part 12a.

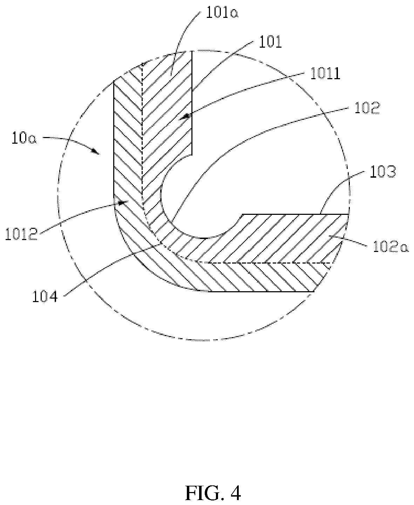

Referring to FIGs. 2 and 4, optionally, when the first extension part 11a and the second extension part 12a are partially sealed, the first extension part 11a and the second extension part 12a include a sealed area 1011 (that is, the sealed part 10b) and an unsealed area 1012. The unsealed area 1012 is a portion of the main body part 10a, and the inner arc edge 104 is an arc edge of a side of the sealed area 1011 connected to the unsealed area 1012.

Referring to FIGs. 1 and 2, in an embodiment, the sealed part 10b includes a first folded edge part 101a and a second folded edge part 102a, where the first outer edge 101 is provided on the first folded edge part 101a, and the second outer edge 103 is provided on the second folded edge part 102a. The sealed part 10b is folded to form the first folded edge part 101a and the second folded edge part 102a, so that the first folded edge part 101a and the second folded edge part 102a abut against the main body part 10a. In this case, under drop conditions, when the first folded edge part 101a and the second folded edge part 102a are impacted, a tearing force applied to the sealed part 10b can be reduced, thereby reducing the risk of the first outer edge 101 and the second outer edge 103 being torn and improving the sealing reliability of the electrochemical apparatus.

Optionally, the first extension part 11a includes a first extension section 111, and the second extension part 12a includes a second extension section 121. After the first shell 11 and the second shell 12 are snap-fitted along the connection position, the first extension section 111 and the second extension section 121 overlap and are hermetically connected, and are then bent to form the first folded edge part 101a. Optionally, the first extension part 11a further includes a third extension section 112, and the second extension part 12a further includes a fourth extension section 122. After the first shell 11 and the second shell 12 are snap-fitted along the connection position, the third extension section 112 and the fourth extension section 122 overlap and are hermetically connected, and are then bent to form the second folded edge part 102a.

In an embodiment, the first folded edge part 101a extends along a first direction, the second folded edge part 102a extends along a second direction, and the first direction intersects with the second direction. Optionally, the first direction is perpendicular to the second direction.

Optionally, the first folded edge part 101a includes a first folded portion and a second folded portion. The first folded portion and the second folded portion are formed by folding along a width direction of the first folded edge part 101a, and the second folded portion is connected to the main body part 10a and the first folded portion. When the first folded edge part 101a abuts against the main body part 10a, the second folded portion is located between the first folded portion and the main body part 10a. The provision of the first folded portion and the second folded portion can improve the sealing reliability of the first folded edge part 101a.

Optionally, the second folded edge part 102a includes a third folded portion and a fourth folded portion. The third folded portion and the fourth folded portion are formed by folding along a width direction of the second folded edge part 102a, and the fourth folded portion is connected to the main body part 10a and the third folded portion. When the second folded edge part 102a abuts against the main body part 10a, the fourth folded portion is located between the third folded portion and the main body part 10a. The provision of the third folded portion and the fourth folded portion can improve the sealing reliability of the second folded edge part 102a.

The following will further described this application with reference to specific embodiments.

L-shaped lithium-ion batteries, with different rₘᵢₙ values, Dₘᵢₙ×rₘᵢₙ values, and Dₘᵢₙ values, Rₘᵢₙ being 5 mm, and first outer edges and second outer edges being single folded edges, were subjected to drop test and hot box test.

Drop test method: 10 lithium-ion batteries were taken and dropped freely from a height of 1.2 m and repeatedly dropped for 20 times, and the number of lithium-ion batteries with sealed parts torn at the inner corners after dropped (that is, the number of tears in drop test) and the number of lithium-ion batteries with sealed parts completely torn at the inner corners (that is, the number of sealing failures in drop test) were counted.

Hot box test method: 10 lithium-ion batteries were taken and placed in an oven at 150°C for 30 minutes, and were observed to determine whether electrolyte leakage occurred at the sealed parts at the inner corners, and the number of batteries with electrolyte leakage was counted and served as the number of sealing failures in hot box test.

The test data were shown in the following table.

| rₘᵢₙ (mm) | Dₘᵢₙ (mm) | rₘᵢₙ×Dₘᵢₙ | Number in test | Number of tears in drop test | Number of sealing failures in drop test | Number of sealing failures in hot box test |
|---|---|---|---|---|---|---|
| 0.1 | 0.2 | 0.02 | 10 | 7 | 5 | 10 |
| 0.1 | 0.5 | 0.05 | 10 | 7 | 3 | 6 |
| 0.1 | 1 | 0.1 | 10 | 8 | 0 | 0 |
| 0.1 | 2 | 0.2 | 10 | 6 | 0 | 0 |
| 0.1 | 3 | 0.3 | 10 | 7 | 0 | 0 |
| 0.3 | 0.2 | 0.06 | 10 | 3 | 2 | 9 |
| 0.3 | 0.5 | 0.15 | 10 | 4 | 0 | 6 |
| 0.3 | 1 | 0.3 | 10 | 3 | 0 | 0 |
| 0.3 | 2 | 0.6 | 10 | 3 | 0 | 0 |
| 0.3 | 3 | 0.9 | 10 | 2 | 0 | 0 |
| 0.5 | 0.2 | 0.1 | 10 | 0 | 0 | 9 |
| 0.5 | 0.5 | 0.25 | 10 | 0 | 0 | 4 |
| 0.5 | 1 | 0.5 | 10 | 0 | 0 | 0 |
| 0.5 | 2 | 1 | 10 | 0 | 0 | 0 |
| 0.5 | 3 | 1.5 | 10 | 0 | 0 | 0 |
| 1 | 0.2 | 0.2 | 10 | 0 | 0 | 10 |
| 1 | 0.5 | 0.5 | 10 | 0 | 0 | 5 |
| 1 | 1 | 1 | 10 | 0 | 0 | 0 |
| 1 | 2 | 2 | 10 | 0 | 0 | 0 |
| 1 | 3 | 3 | 10 | 0 | 0 | 0 |
| 2 | 0.2 | 0.4 | 10 | 0 | 0 | 10 |
| 2 | 0.5 | 1 | 10 | 0 | 0 | 6 |
| 2 | 1 | 2 | 10 | 0 | 0 | 0 |
| 2 | 2 | 4 | 10 | 0 | 0 | 0 |
| 2 | 3 | 6 | 10 | 0 | 0 | 0 |

It can be seen from Table 1 that compared with the L-shaped lithium-ion batteries with rₘᵢₙ being 0.1 mm, the number of tears of the sealed parts at the inner corners of the L-shaped lithium-ion batteries with rₘᵢₙ≥0.3 mm in drop test is significantly reduced, especially when rₘᵢₙ≥0.5 mm, the number of tears of the sealed parts at the inner corners of the L-shaped lithium-ion batteries in the drop test is zero. This is because setting the minimum curvature radius of the outer arc edge to be greater than or equal to 0.3 mm can reduce the stress concentration at the outer arc edge of the sealed part under drop conditions, thereby reducing the risk of tear and damage to the sealed part of the battery under drop conditions, which otherwise causes safety accidents.

Furthermore, when Dₘᵢₙ×rₘᵢₙ≥0.1, the number of the sealed parts completely torn at the inner corners of the L-shaped lithium-ion batteries in the drop test is zero. In this case, the sealing width at the position of the minimum curvature radius of the outer arc edge can match the stress applied to this position, which can reduce the risk of the position of the minimum curvature radius being completely torn, improving the sealing reliability of the battery.

In addition, when Dₘᵢₙ≥1 mm, the number of sealing failures of the L-shaped lithium-ion batteries in the hot box test is significantly reduced. This is because Dₘᵢₙ≥1 mm can increase the sealing width at the position of the minimum curvature radius of the outer arc edge at the inner corner, thereby increasing the sealing strength at this position and reducing the risk of failure of the sealed part at the inner corner

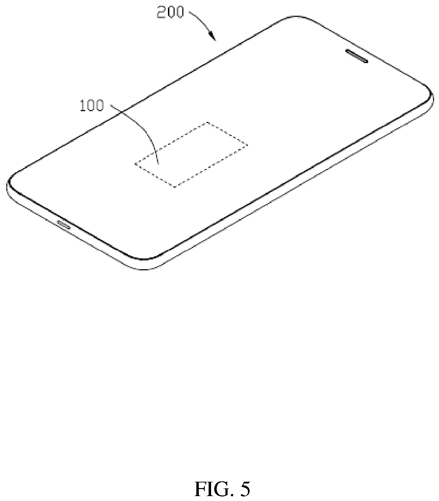

Referring to FIG. 5, this application further provides an electric device 200 using the electrochemical apparatus 100 according to any one of the foregoing embodiments. In an embodiment, the electric device 200 in this application may be but is not limited to a mobile phone, a drone, an electric vehicle, an electric motorcycle, an electric motor bicycle, an electric tool, or a large household battery.

Persons of ordinary skill in the art should appreciate that the foregoing embodiments are for description of this application only but not for limiting this application. Appropriate modifications and variations made to the foregoing embodiments without departing from the essential spirit and scope of this application all fall within the scope of this application.

## Claims

1. An electrochemical apparatus, comprising:
a housing, comprising a main body part and a sealed part extending outward from an edge of the main body part, wherein the main body part is configured to accommodate an electrode assembly, and the sealed part comprises a first outer edge, an outer arc edge, and a second outer edge, the outer arc edge connecting the first outer edge and the second outer edge, the outer arc edge protruding toward the main body part, and a minimum curvature radius of the outer arc edge being rₘᵢₙ mm, satisfying: rₘᵢₙ≥0.3.

2. The electrochemical apparatus according to claim 1, wherein the sealed part further comprises an inner arc edge, the inner arc edge protrudes toward the main body part, and a distance from a position with the minimum curvature radius of the outer arc edge to the inner arc edge is Dₘᵢₙ mm, satisfying: Dₘᵢₙ×rₘᵢₙ≥0.1.

3. The electrochemical apparatus according to claim 2, wherein Dₘᵢₙ≥1.

4. The electrochemical apparatus according to claim 2, wherein a minimum curvature radius of the inner arc edge is Rₘᵢₙ mm, satisfying: Rₘᵢₙ≥2.

5. The electrochemical apparatus according to claim 1, wherein the sealed part comprises a first folded edge part and a second folded edge part, the first outer edge is provided on the first folded edge part, and the second outer edge is provided on the second folded edge part.

6. The electrochemical apparatus according to claim 5, wherein the first folded edge part extends along a first direction, the second folded edge part extends along a second direction, and the first direction intersects with the second direction.

7. The electrochemical apparatus according to claim 5, wherein at least one of the following conditions is met:
(a) the first folded edge part comprises a first folded portion and a second folded portion, and the second folded portion being located between the first folded portion and the main body part;
(b) the second folded edge part comprises a third folded portion and a fourth folded portion, and the fourth folded portion being located between the third folded portion and the main body part.

8. The electrochemical apparatus according to claim 1, wherein a shape of the housing comprises any one of L shape, V shape, U shape, or W shape.

9. The electrochemical apparatus according to claim 1, wherein the electrode assembly comprises at least one of a wound structure or a laminated structure.

10. An electric device, comprising the electrochemical apparatus according to any one of claims 1 to 9.
